# EUROPEAN PATENT SPECIFICATION

(11) **EP 4 285 701 B1**
(45) Date of publication and mention of the grant of the patent: **25.02.2026**
(21) Application number: 22176221.4
(22) Date of filing: 30.05.2022
(51) Int. Cl.: A01B 73/00, A01D 41/14, A01D 75/04

(54) **AGRICULTURAL VEHICLE WITH HEADER HAVING A TRACKING WHEEL SYSTEM WITH A ROTATION-INDUCING PROJECTION**
LANDWIRTSCHAFTLICHES FAHRZEUG, DAS EIN SPURTREUES RADSYSTEM MIT EINEM ROTATIONSINDUZIERENDEN VORSPRUNG AUFWEIST
VÉHICULE AGRICOLE AVEC COLLECTEUR DOTÉ D'UN SYSTÈME DE ROUE DE SUIVI AVEC PROJECTION INDUITE PAR ROTATION

(43) Date of publication of application: 06.12.2023
(73) Proprietor: CNH Industrial Belgium N.V., 8210 Zedelgem (BE)
(72) Inventor: Wyseur, Jovanni, 8600 Diksmuide (BE); Beelaert, Simon, 9991 Adegem (BE); Van Belleghem, Stijn, 9990 Maldegem (BE); Blancke, Jeffrey, 8720 Markegem (BE)
(74) Representative: CNH Industrial IP Department

(56) References cited:
- EP-B1- 1 733 609
- CN-U- 202 639 239
- US-A1- 2011 173 944
- US-B2- 9 386 748

## Description

### BACKGROUND OF THE INVENTION

The present invention relates to agricultural vehicles and, more particularly, to tracking wheel assemblies for agricultural vehicles.

Certain agricultural machines, such as forage harvesters and balers, are required to collect crop material, that has been cut, from the field. The component of such agricultural machines which gathers the crop material and feeds it further into the machine for processing is generally known as a pick-up assembly. A pick-up assembly typically comprises a pickup drum rotatably mounted on a frame, with radially arranged projecting tines to collect the crop material and propel it upwards, past a guiding element and then into a feed channel through which the crop material is conveyed into the machine for subsequent processing, such as baling, threshing, chopping, storing and/or depositing. This guiding element is generally referred to as a windguard, and serves the purposes of restricting the movement of the collected crop material in the forward and upward direction, shielding the crop flow path from wind influence and guiding the crop material efficiently into the feed channel.

Known headers may include tracking wheels that run on a ground surface to support the tines at a certain height from the ground. The tracking wheels generally travel in the same direction as the header when the header is operating so the tracking wheels roll in the travel direction of the header during operation. When the header is being transported on a public road, the header must meet certain size requirements. One such requirement is the width of the header, which may not be satisfied if the tracking wheels stay in their operating position on lateral sides of the header.

US9386748B2 patent application is about a folding wheel transport assembly is attachable to a header frame of an agricultural harvester and includes a wheel, a wheel axle support member carrying the wheel, a linkage connected to the wheel axle support member, and an actuator for moving the linkage and the wheel from a transportation position to a harvesting position. The wheel axle support member is pivotably connected to the linkage whereby the wheel pivots inwardly toward the header frame as the wheel moves between the transportation and harvesting positions. An additional joint is added to allow the wheel support to fold with assistance from a control rod that is mounted to the main transport frame. Two additional angles were also added that when in road mode become pinched between the wheel frame and the transport main frame so that the control rod does not see any loading while traveling on the highway.

What is needed in the art is a way to move tracking wheels of a header to a transport position that addresses some of the issues associated with known headers.

### SUMMARY OF THE INVENTION

The present invention provides a header for an agricultural vehicle according to claim 1.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a side view of an exemplary embodiment of an agricultural vehicle including a header, illustrated in the form of a forage harvester, provided according to the present disclosure;
FIG. 2 is a perspective view of the agricultural vehicle of FIG. 1 with a tracking fork in a first position and a tracking wheel in a first orientation, in accordance with the present disclosure;
FIG. 3 is a perspective view of the agricultural vehicle of FIGS. 1-2 as the tracking fork is pivoting towards a second position with a projection of the tracking fork contacting a windguard arm;
FIG. 4 is a front view of the tracking fork in the position illustrated in FIG. 3;
FIG. 5 is a top view of the tracking fork in the position illustrated in FIGS. 3-4; and
FIG. 6 is a top view of the tracking fork in the second position with the tracking wheel in a second orientation so the tracking fork abuts against the windguard arm to inhibit rotation of the tracking wheel and a wheel axis of the tracking wheel is generally parallel with a rotation axis of a windguard roller.

Corresponding reference characters indicate corresponding parts throughout the several views. The exemplifications set out herein illustrate embodiments of the invention, and such exemplifications are not to be construed as limiting the scope of the claims.

### DETAILED DESCRIPTION OF THE INVENTION

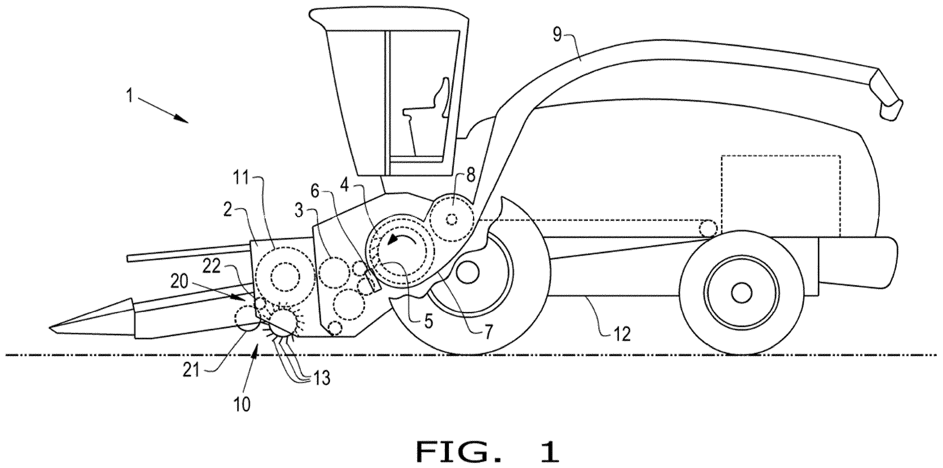

FIG. 1 shows a schematic side view of an exemplary embodiment of an agricultural vehicle, illustrated in the form of a forage harvester 1. As the harvester 1 advances through a field, crops are gathered by a header 2 and transported to a central area of the header 2 where the crops enter a set of feed rolls 3. The rolls 3 guide the crops in the form of a mat with a given thickness towards the cutting drum 4, which rotates in the direction indicated by the arrow, about a rotation axis that is transversal to the direction of movement of the crops. Knives 5 are mounted on the drum 4 (only four are shown, the knives 5 are distributed along the full circumference of the drum 4), so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. The harvester 1 includes a pickup 10 that picks up crop material and moves it toward a crop material conveyor 11, illustrated in the form of an auger. The harvester 1 also includes a chassis 12, which carries the components of the harvester 1. The pickup 10 includes a plurality of rotatable tines 13 that are configured to pickup crop material as the forage harvester 1 travels forward. To reduce the risk of wind blowing away crop material, the header 2 also includes a windguard assembly 20 that includes at least one windguard roller, illustrated as a first windguard roller 21 and a second windguard roller 22. It should be appreciated that while the agricultural vehicle 1 is illustrated and described as a forage harvester, in some embodiments the agricultural vehicle is in the form of other agricultural vehicles such as a combine harvester, *e.g*., a harvester configured for harvesting wheat, corn, or other grains, or a baler, *e.g.,* a large square baler, a small square baler, or a round baler.

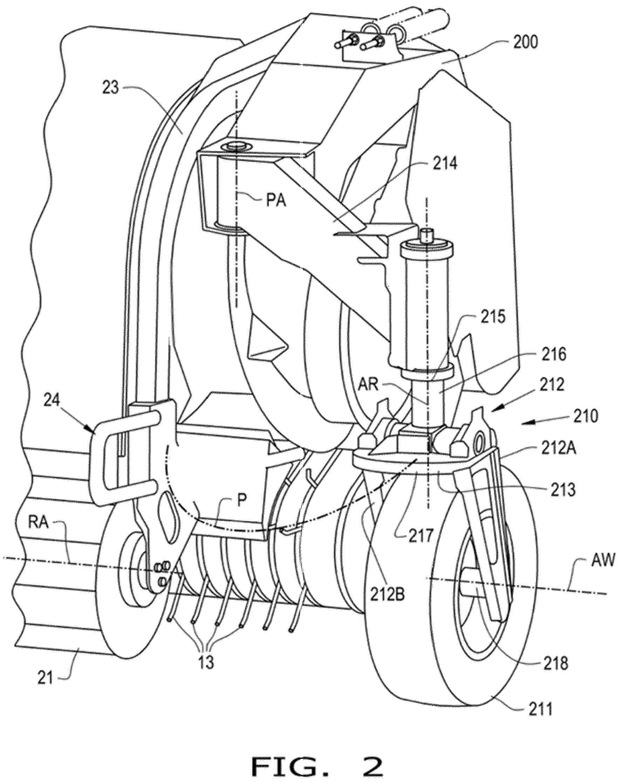

Referring now to FIG. 2, it is illustrated that the windguard assembly 20 includes a windguard arm 23 that is pivotably coupled to a header frame 200 of the header 2. The header frame 200 may also carry the pickup 10. The windguard arm 23 is coupled to the first windguard roller 21 so the first windguard roller 21 is pivotable while the second windguard roller 22 may be a stationary roller. It should be appreciated that while only one windguard arm 23 is illustrated coupled to the first windguard roller 21 in FIG. 2, another similar windguard arm 23 may be coupled to an opposite end of the first windguard roller 21 so both ends of the first windguard roller 21 are supported by a respective windguard arm.

The header 2 also includes a tracking wheel assembly 210. The tracking wheel assembly 210 includes a tracking wheel 211 that is coupled to a tracking fork 212. As illustrated in FIG. 2, the tracking wheel 211 may be provided in a first orientation, which may also be referred to herein as an "operating orientation," that is parallel to a travel direction of the header 2 when the header 2 is operating in a field. The tracking wheel 211 may help keep the tines 13 at a desired height, relative to the ground, during operation.

In known agricultural vehicles, the tracking wheels generally run in an operating position and orientation at the side of the header next to the tines close to the center of a reel carrying the tines in order to provide optimal ground following of the tines in changing ground conditions and levels. The wheels are also run at a certain width so the wheels can rotate while making a turn of changing from the driving direction without hitting the header. These requirements make it so the tracking wheels cannot be driven on public roads in the operating position and orientation and must be moved. However, it has been found that the width of the windguard assembly limits the available space for the tracking wheels and the wheels may be prone to rotating if not locked into place, which can cause the wheels to hit the windguard roller and/or move outside the legally allowed road width.

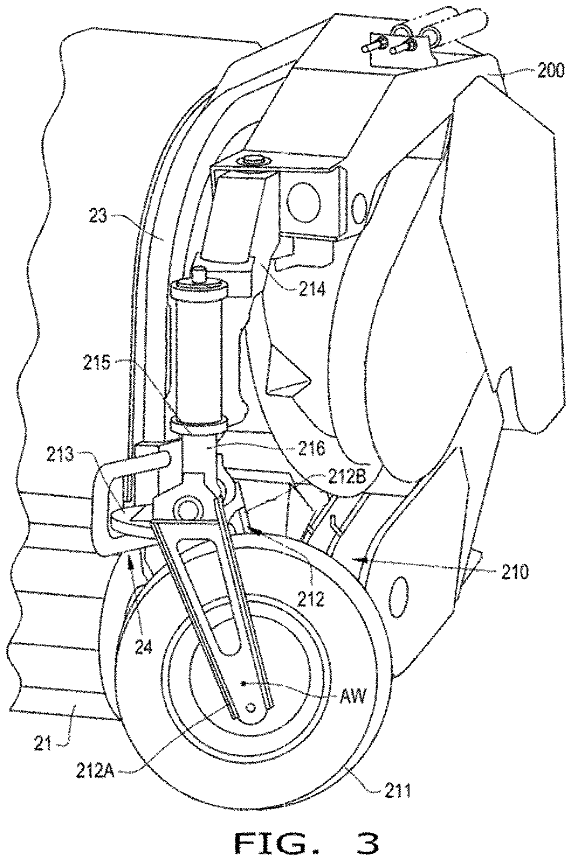

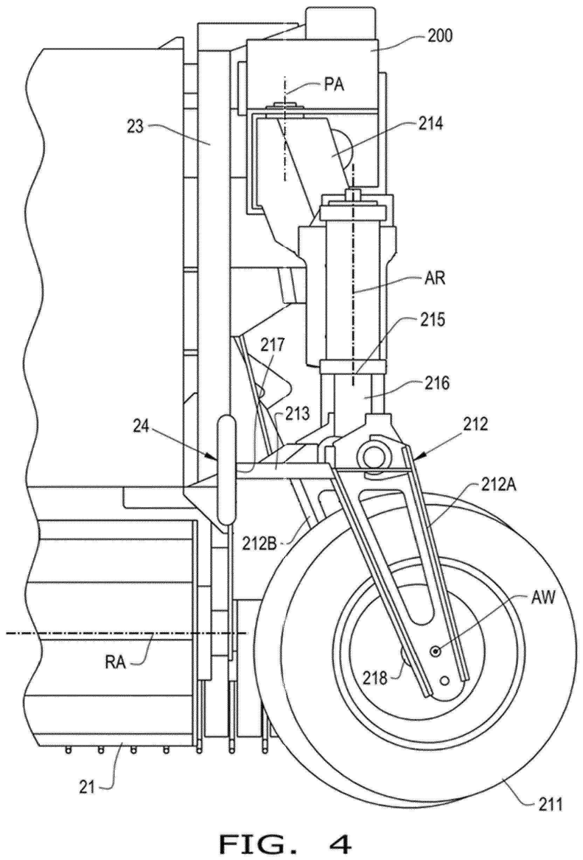

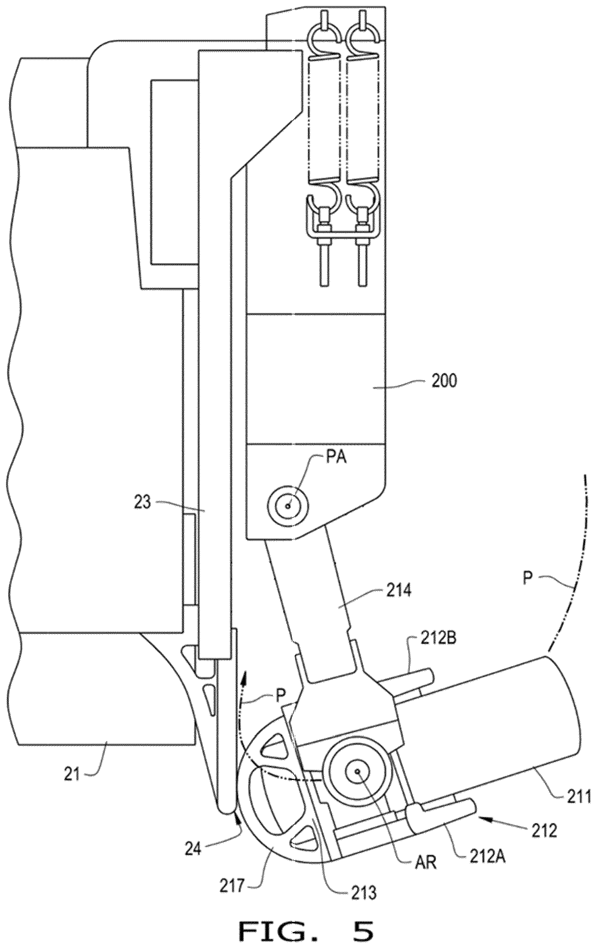

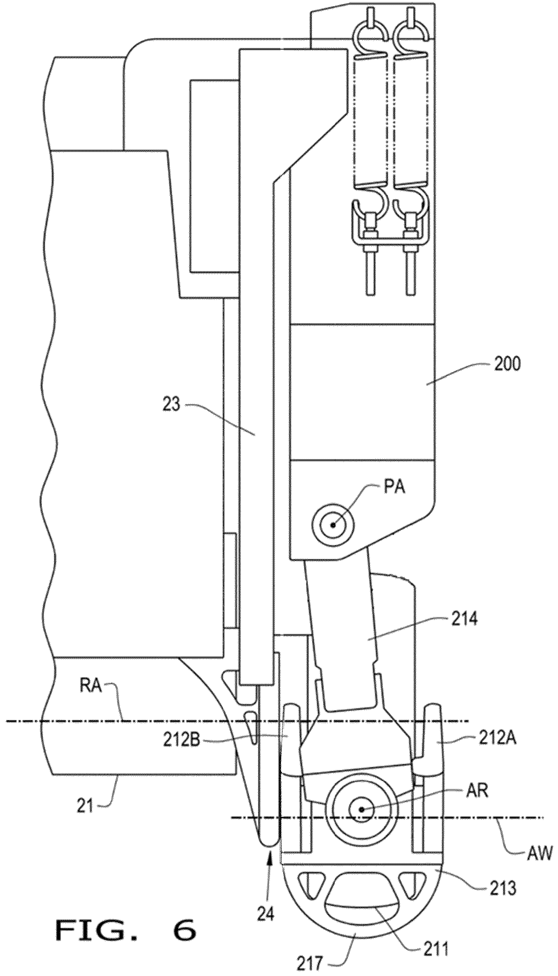

To address some of the previously described issues, and referring still to FIG. 2 and now FIGS. 3-6 as well, the tracking fork 212 is pivotable from a first position, illustrated in FIG. 2, to a second position, illustrated in FIG. 6, and includes a projection 213 that contacts the windguard arm 23 as the tracking fork 212 pivots from the first position to the second position. The projection 213 may be any portion of the tracking fork 212 that contacts the windguard arm 23 during pivoting of the tracking fork 212 from the first position to the second position. The contact of the projection 213 with the windguard arm 23 causes the tracking wheel 211 to rotate to an orientation where the tracking fork 212 abuts against the windguard arm 23 (best illustrated in FIG. 6) to inhibit rotation of the tracking wheel 211 when the tracking fork 212 is in the second position. The projection 213 contacting the windguard arm 23 as the tracking fork 212 pivots to rotate the tracking wheel 211 so the tracking fork 212 abuts against the windguard arm 23 to inhibit rotation of the tracking wheel 211 provides a reliable and convenient way to rotate the tracking wheel 211 to the desired orientation and lock the tracking wheel 211 for road transport without needing, for example, to effect a separate movement of the tracking wheel 211 either manually by a user or using a separate element, such as an actuator.

In some embodiments, a wheel axis AW of the tracking wheel 211 is generally parallel with a rotation axis RA of the first windguard roller 21 when the tracking fork 212 is in the second position. The wheel axis AW of the tracking wheel 211 is the axis about which the tracking wheel 211 rotates when rolling across a surface. As used herein, the tracking wheel 211 is "generally parallel" when the wheel axis AW of the tracking wheel 211 extends at an angle of no more than 10° relative to the rotation axis RA. Preferably, the wheel axis AW of tracking wheel 211 is completely parallel to the rotation axis RA of the first windguard roller 21 so no angle is defined between the wheel axis AW of the tracking wheel 211 and the rotation axis RA when the tracking fork 212 is in the second position. It should be appreciated that, according to the present disclosure, the wheel axis AW of the tracking wheel 211 is also considered to be "completely parallel" to the rotation axis RA of the first windguard roller 21 when the wheel axis AW is co-axial with the rotation axis RA. In some embodiments, the tracking wheel 211 is oriented so the wheel axis AW is parallel to the rotation axis RA in the first position of the tracking fork 212 as well.

In some embodiments, the tracking fork 212 carries the tracking wheel 211 as the tracking fork 212 pivots from the first position to the second position. The tracking fork 212 may, for example, include a pair of fork prongs 212A, 212B that each couple to an axle 218 defining the wheel axis AW of the tracking wheel 211. By having the tracking fork 212 carry the tracking wheel 211 while pivoting from the first position to the second position and simultaneously causing rotation of the tracking wheel 211, the tracking wheel 211 can be moved to both a desired position and orientation via the pivoting of the tracking fork 212. It should be appreciated that, in some embodiments, the tracking fork 212 may be configured to pivot from a first position to a second position without causing further pivoting, or any pivoting at all, of the tracking wheel 211 while still causing rotation of the tracking wheel 211. It should thus be appreciated that the tracking fork 212 does not necessarily need to cause pivoting of the tracking wheel 211 in order to rotate the tracking wheel 211. In this respect, the tracking wheel 211 may be rotatable independently of pivoting of the tracking fork 212. Further, as can be appreciated from comparing FIGS. 2 and 6, pivoting the tracking fork 212 from the first position to the second position can bring the tracking wheel 211 laterally inward to reduce the overall width of the header 2 relative to when the tracking fork 212 is in the first position while still locking the tracking wheel 211 against rotation in an orientation where the wheel axis AW is parallel to the rotation axis RA for road transport.

To rotate the tracking wheel 211 independently of pivoting of the tracking fork 212, the tracking fork 212 may be coupled to a tracking arm 214 that is pivotably coupled to the header frame 200. Pivoting of the tracking arm 214 about a pivot axis PA causes a corresponding pivoting of the tracking fork 212, as can be appreciated from comparing FIG. 2 with FIGS. 3-6. The tracking arm 214 may include a pivot opening 215 and the tracking fork 212 may include a pivot stem 216 that is held in the pivot opening 215. The pivot stem 216 may be rotatable within the pivot opening 215 about an axis that also defines an axis of rotation AR of the tracking wheel 211 such that rotation of the pivot stem 216 within the pivot opening 215 causes a corresponding rotation of the tracking wheel 211 about the axis of rotation AR. The pivot stem 216 being held in the pivot opening 215 also allows pivoting of the tracking arm 214 to cause pivoting of the tracking fork 212 about the pivot axis PA, due to contact between sidewalls of the pivot opening 215 and the pivot stem 216, without rotating the tracking wheel 211 about the axis of rotation AR.

The projection 213 contacts the windguard arm 23 to rotate the tracking wheel 211 as the tracking fork 212 pivots from the first position to the second position. The tracking fork 212 may pivot through a pivot path, indicated by arrow P, from the first position to the second position, which can be appreciated from FIGS. 2-6, with the projection 213 contacting the windguard arm 23 during a portion, *i.e.,* not an entirety, of the tracking fork 212 pivoting through the pivot path P. In some embodiments, the projection 213 slides across the windguard arm 23 as the tracking fork 212 pivots from the first position to the second position, with the projection 213 sliding across the windguard arm 23 causing the tracking wheel 211 to rotate. The shape of the projection 213 is chosen so that the contact, *e.g.,* sliding along, of the projection 213 with the windguard arm 23 causes the desired rotation of the tracking wheel 211 to an orientation where the tracking fork 212 abuts against the windguard arm 23 to inhibit rotation of the tracking wheel 211 and, in some embodiments, so the wheel axis AW is parallel with the rotation axis RA of the first windguard roller 21. The projection 213 may, for example, include a rounded surface 217 that contacts the windguard arm 23, such as by sliding across the windguard arm 23, to cause the tracking wheel 211 to rotate.

As can be appreciated from FIGS. 3-6, the rounded surface 217 sliding across the windguard arm 23 causes a gradual rotation of the tracking wheel 211 as the rounded surface 217 slides across the windguard arm 23. In such embodiments, the projection 213 may comprise a hoop that extends from the tracking fork 212. Preferably, the projection 213 is a hoop defining a semi-circular shape, as illustrated. The projection (hoop) 213 may couple the fork prongs 212A, 212B of the tracking fork 212 to one another and thus act as a support hoop. The projection 213 may extend from any portion of the tracking fork 212 that allows the projection 213 to contact the windguard arm 23 during pivoting of the tracking fork 212 along the pivot path P, *e.g.,* on a front of the tracking fork 212. As especially illustrated in FIGS. 3-5, the windguard arm 23 may include a contact section 24 that the projection 213 contacts as the tracking fork 212 pivots to the second position. The contact section 24 may, for example, include a side portion of the windguard arm 23. When the tracking fork 212 is in the second position, the tracking fork 212, such as a side of one of the fork prongs 212B, is forced to abut against the windguard arm 23, as illustrated in FIG. 6, to inhibit rotation of the tracking wheel 211 in either direction to, for example, prevent the tracking wheel 211 from uncontrollably rotating so the wheel axis AW comes out of being parallel with the rotation axis RA of the first windguard roller 21. The tracking wheel 211 may only be free to rotate again upon the tracking fork 212 being pivoted from the second position back towards the first position so the tracking fork 212 does not abut against the windguard arm 23. Pivoting the tracking fork 212 to the second position thus not only moves the tracking wheel 211 to the proper orientation and position for transport, but also locks the tracking wheel 211 against rotation during transport that may arise due to, for example, bumps on the road during transport. While the projection 213 is described and illustrated as sliding across the windguard arm 23 to cause rotation of the tracking wheel 211, it should be appreciated that the projection 213 does not need to appreciably slide along the windguard arm 23 to rotate the tracking wheel 211 so the tracking fork 212 locks the tracking wheel 211 from rotation, and in some embodiments so the wheel axis AW is parallel with the rotation axis RA of the first windguard roller 21. The projection 213 may momentarily contact the windguard arm 23, for example, so a portion of the windguard arm 23 acts as a strike plate that causes a sudden rotation of the tracking wheel 211 to an orientation where the tracking fork 212 abuts against the windguard arm 23 to inhibit rotation of the tracking wheel 211. It should thus be appreciated that the projection 213 of the tracking fork 212 can be configured in a variety of ways to contact the windguard arm 23 and rotate the tracking wheel 211.

From the foregoing, it should be appreciated that the tracking wheel assembly 210 provided according to the present disclosure provides a tracking fork 212 that pivots to contact the windguard arm 23 and cause rotation of a tracking wheel 211 so the tracking fork 212 abuts against the windguard arm 23 in a manner that inhibits rotation of the tracking wheel 211. The tracking fork 212 may also carry the tracking wheel 211 during pivoting, with rotation of the tracking wheel 211 being independent of the pivoting, so the tracking fork 212 both carries the tracking wheel 211 to the proper position and rotates the tracking wheel 211 to the proper orientation for road transport. The tracking fork 212 can also be pivoted to a position where the wheel axis AW of the tracking wheel 211 is parallel with the rotation axis RA of the first windguard roller 21 when the tracking fork 212 is in the second position so the tracking wheel 211 is oriented for road transport. Thus, the tracking wheel assembly 210 provided according to the present disclosure provides a reliable and convenient way to re-position and lock the tracking wheel 211 for transport that only requires movement of the tracking fork 212, which simplifies the procedure.

While this invention has been described with respect to at least one embodiment, the present invention can be further modified within the scope of the claims.

## Claims

1. A header (2) for an agricultural vehicle (1), comprising:
a header frame (200);
a windguard assembly (20) carried by the header frame (200), the windguard assembly (20) comprising a windguard roller (21) coupled to a windguard arm (23) that is pivotably coupled to the header frame (200); and
a tracking wheel assembly (210) carried by the header frame (200) and comprising a tracking wheel (211) coupled to a tracking fork (212);
whereby the tracking fork (212) is pivotable from a first position to a second position;
**characterized in that**:
the tracking fork (212) comprises a projection (213) that contacts the windguard arm (23) as the tracking fork (212) pivots from the first position to the second position such that contact of the projection (213) with the windguard arm (23) causes the tracking wheel (211) to rotate to an orientation where the tracking fork (212) abuts against the windguard arm (23) to inhibit rotation of the tracking wheel (211) when the tracking fork (212) is in the second position.

2. The header (2) of claim 1, wherein the tracking fork (212) carries the tracking wheel (211) as the tracking fork (212) pivots from the first position to the second position.

3. The header (2) of any one of the preceding claims, wherein the tracking wheel (211) is rotatable independently of pivoting of the tracking fork (212).

4. The header (2) of any one of the preceding claims, wherein the tracking fork (212) is coupled to a tracking arm (214) that is pivotably coupled to the header frame (200).

5. The header (2) of claim 4, wherein the tracking arm (214) comprises a pivot opening (215) and the tracking fork (212) comprising a pivot stem (216) held in the pivot opening (215), the pivot stem (216) defining an axis of rotation (AR) of the tracking wheel (211).

6. The header (2) of any one of the preceding claims, wherein the projection (213) slides across the windguard arm (23) as the tracking fork (212) pivots from the first position to the second position and the projection (213) sliding across the windguard arm (23) causes the tracking wheel (211) to rotate.

7. The header (2) of any one of the preceding claims, wherein the tracking fork (212) pivots through a pivot path (P) from the first position to the second position and the projection (213) contacts the windguard arm (23) during a portion of the tracking fork (212) pivoting through the pivot path (P).

8. The header (2) of any one of the preceding claims, wherein the projection (213) comprises a rounded surface (217) that contacts the windguard arm (23) to cause the tracking wheel (211) to rotate.

9. The header (2) of claim 8, wherein the projection (213) comprises a hoop extending from the tracking fork (212), the hoop (213) preferably defining a semi-circular shape.

10. The header (2) of any one of the preceding claims, wherein a wheel axis (AW) of the tracking wheel (211) is generally parallel, preferably completely parallel, with a rotation axis (RA) of the windguard roller (21) when the tracking fork (212) is in the second position.

11. The header (2) of any one of the preceding claims, wherein the tracking wheel (211) comprises an axle (218) defining the wheel axis (AW) and the tracking fork (212) comprises a pair of fork prongs (212A, 212B) that each couple to the axle (218), wherein one of the fork prongs (212B) preferably abuts against the windguard arm (23) when the tracking fork (212) is in the second position to inhibit rotation of the tracking wheel (211).

12. The header (2) of claim 11, wherein the projection (213) couples the fork prongs (212A, 212B) together.

13. The header (2) of any one of the preceding claims, wherein the windguard arm (23) comprises a contact section (24) that the projection (213) contacts as the tracking fork (212) pivots to the second position, the contact section (24) comprising a side portion of the windguard arm (23).

14. An agricultural vehicle (1), comprising a chassis (12) and the header (2) of any one of the preceding claims carried by the chassis (12) and further comprising a pickup (10) comprising a plurality of rotatable tines (13).

15. The agricultural vehicle (1) of claim 14, wherein the agricultural vehicle (1) is a forage harvester.

## Patentansprüche

1. Vorsatz (2) für ein landwirtschaftliches Fahrzeug (1), umfassend:
einen Vorsatzrahmen (200);
eine Windschutzvorrichtungsanordnung (20), die vom Vorsatzrahmen (200) getragen wird, wobei die Windschutzvorrichtungsanordnung (20) eine Windschutzwalze (21) umfasst, der mit einem Windschutzarm (23) verbunden ist, der schwenkbar mit dem Vorsatzrahmen (200) verbunden ist; und
eine Spurführungsanordnung (210), die vom Vorsatzrahmen (200) getragen wird und ein Spurführungrad (211) umfasst, das mit einer Spurführungsgabel (212) verbunden ist;
wobei die Spurführungsgabel (212) aus einer ersten Position in eine zweite Position schwenkbar ist;
**dadurch gekennzeichnet, dass**:
die Spurführungsgabel (212) eine Auskragung (213) umfasst, die mit dem Windschutzarm (23) in Kontakt tritt, wenn die Spurführungsgabel (212) aus der ersten Position in die zweite Position schwenkt, sodass der Kontakt der Auskragung (213) mit dem Windschutzarm (23) dazu führt, dass sich das Spurführungrad (211) in eine Orientierung dreht, in der die Spurführungsgabel (212) gegen den Windschutzarm (23) stößt, um die Drehung des Spurführungrads (211) zu verhindern, wenn sich die Spurführungsgabel (212) in der zweiten Position befindet.

2. Vorsatz (2) nach Anspruch 1, wobei die Spurführungsgabel (212) das Spurführungrad (211) trägt, wenn die Spurführungsgabel (212) aus der ersten Position in die zweite Position schwenkt.

3. Vorsatz (2) nach einem der vorhergehenden Ansprüche, wobei das Spurführungrad (211) unabhängig von der Schwenkbewegung der Spurführungsgabel (212) drehbar ist.

4. Vorsatz (2) nach einem der vorhergehenden Ansprüche, wobei die Spurführungsgabel (212) mit einem Spurführungsarm (214) verbunden ist, der schwenkbar mit dem Vorsatzrahmen (200) verbunden ist.

5. Vorsatz (2) nach Anspruch 4, wobei der Spurführungsarm (214) eine Drehöffnung (215) umfasst und die Spurführungsgabel (212) einen Drehschaft (216) umfasst, der in der Drehöffnung (215) gehalten ist, wobei der Drehschaft (216) eine Rotationsachse (AR) des Spurführungrads (211) definiert.

6. Vorsatz (2) nach einem der vorhergehenden Ansprüche, wobei die Auskragung (213) über den Windschutzarm (23) gleitet, wenn die Spurführungsgabel (212) aus der ersten Position in die zweite Position schwenkt, und das Gleiten der Auskragung (213) über den Windschutzarm (23) das Spurführungrad (211) zum Drehen bringt.

7. Vorsatz (2) nach einem der vorhergehenden Ansprüche, wobei die Spurführungsgabel (212) entlang eines Schwenkwegs (P) aus der ersten Position in die zweite Position schwenkt und die Auskragung (213) während eines Teils des Schwenkens der Spurführungsgabel (212) über den Schwenkweg (P) mit dem Windschutzarm (23) in Kontakt tritt.

8. Vorsatz (2) nach einem der vorhergehenden Ansprüche, wobei die Auskragung (213) eine abgerundete Oberfläche (217) umfasst, die mit dem Windschutzarm (23) in Kontakt tritt, um das Spurführungrad (211) zum Drehen zu bringen.

9. Vorsatz (2) nach Anspruch 8, wobei die Auskragung (213) einen Bügel umfasst, der sich von der Spurführungsgabel (212) aus erstreckt, wobei der Bügel (213) vorzugsweise eine halbkreisförmige Form definiert.

10. Vorsatz (2) nach einem der vorhergehenden Ansprüche, wobei eine Radachse (AW) des Spurführungrads (211) im Allgemeinen parallel, vorzugsweise vollständig parallel, zu einer Rotationsachse (RA) der Windschutzwalze (21) ist, wenn sich die Spurführungsgabel (212) in der zweiten Position befindet.

11. Vorsatz (2) nach einem der vorhergehenden Ansprüche, wobei das Spurführungrad (211) eine Achse (218) umfasst, die die Radachse (AW) definiert, und die Spurführungsgabel (212) ein Paar von Gabelzinken (212A, 212B) umfasst, die jeweils mit der Achse (218) verbunden sind, wobei eine der Gabelzinken (212B) vorzugsweise gegen den Windschutzarm (23) stößt, wenn sich die Spurführungsgabel (212) in der zweiten Position befindet, um die Drehung des Spurführungrads (211) zu verhindern.

12. Vorsatz (2) nach Anspruch 11, wobei die Auskragung (213) die Gabelzinken (212A, 212B) miteinander verbindet.

13. Vorsatz (2) nach einem der vorhergehenden Ansprüche, wobei der Windschutzarm (23) einen Kontaktabschnitt (24) umfasst, mit dem die Auskragung (213) in Kontakt tritt, wenn die Spurführungsgabel (212) in die zweite Position schwenkt, wobei der Kontaktabschnitt (24) einen Seitenabschnitt des Windschutzarms (23) umfasst.

14. Landwirtschaftliches Fahrzeug (1), umfassend ein Fahrgestell (12) und den Vorsatz (2) nach einem der vorhergehenden Ansprüche, der vom Fahrgestell (12) getragen wird, und weiterhin umfassend eine Pickup-Einrichtung (10), die eine Mehrzahl von drehbaren Zinken (13) umfasst.

15. Landwirtschaftliche Fahrzeug (1) nach Anspruch 14, wobei das landwirtschaftliche Fahrzeug (1) ein Feldhäcksler ist.

## Revendications

1. Un organe de coupe (2) pour un véhicule
agricole (1), comprenant :
un châssis d'organe de coupe (200) ;
un assemblage pare-vent (20) supporté par le châssis de l'organe de coupe (200), l'assemblage pare-vent (20) comprenant un rouleau de pare-vent (21) couplé à un bras de pare-vent (23) qui est couplé de manière pivotable au châssis de l'organe de coupe (200) ; et
un assemblage de roue de suivi (210) supporté par le châssis de l'organe de coupe (200) et comprenant une roue de suivi (211) couplée à une fourche de suivi (212) ;
la fourche de suivi (212) étant pivotable d'une première position à une seconde position ;
**caractérisé en ce que** :
la fourche de suivi (212) comprend une saillie (213) qui entre en contact avec le bras du pare-vent (23) lorsque la fourche de suivi (212) pivote de la première position vers la seconde position, de telle sorte que le contact de la saillie (213) avec le bras du pare-vent (23) entraîne la rotation de la roue de suivi (211) vers une orientation dans laquelle la fourche de suivi (212) bute contre le bras du pare-vent (23) pour empêcher la rotation de la roue de suivi (211) lorsque la fourche de suivi (212) se trouve dans la seconde position.

2. L'organe de coupe (2) visé à la revendication 1, dans lequel la fourche de suivi (212) supporte la roue de suivi (211) lorsque la fourche de suivi (212) pivote de la première position vers la seconde position.

3. L'organe de coupe (2) visé à une quelconque revendication parmi celles qui précèdent, dans lequel la roue de suivi (211) peut tourner indépendamment du pivotement de la fourche de suivi (212).

4. L'organe de coupe (2) visé à une quelconque revendication parmi celles qui précèdent, dans lequel la fourche de suivi (212) est couplée à un bras de suivi (214) qui est couplé de manière pivotable au châssis de l'organe de coupe (200).

5. L'organe de coupe (2) visé à la revendication 4, dans lequel le bras de suivi (214) comprend une ouverture de pivotement (215) et la fourche de suivi (212) comprend une tige de pivotement (216) maintenue dans l'ouverture de pivotement (215), la tige de pivotement (216) définissant un axe de rotation (AR) de la roue de suivi (211).

6. L'organe de coupe (2) visé à une quelconque revendication parmi celles qui précèdent, dans lequel la saillie (213) glisse sur le bras du pare-vent (23) lorsque la fourche de suivi (212) pivote de la première position vers la seconde position, et le glissement de la saillie (213) sur le bras du pare-vent (23) fait tourner la roue de suivi (211).

7. L'organe de coupe (2) visé à une quelconque revendication parmi celles qui précèdent, dans lequel la fourche de suivi (212) pivote selon une trajectoire de pivotement (P) de la première position vers la seconde position et la saillie (213) entre en contact avec le bras du pare-vent (23) pendant une partie du pivotement de la fourche de suivi (212) selon la trajectoire de pivotement (P).

8. L'organe de coupe (2) visé à une quelconque revendication parmi celles qui précèdent, dans lequel la saillie (213) comprend une surface arrondie (217) qui entre en contact avec le bras du pare-vent (23) pour faire tourner la roue de suivi (211).

9. L'organe de coupe (2) visé à la revendication 8, dans lequel la saillie (213) comprend un arceau s'étendant à partir de la fourche de suivi (212), l'arceau (213) définissant de préférence une forme semi-circulaire.

10. L'organe de coupe (2) visé à une quelconque revendication parmi celles qui précèdent, dans lequel un axe de roue (ARu) de la roue de suivi (211) est généralement parallèle, et de préférence complètement parallèle, à un axe de rotation (ARt) du rouleau du pare-vent (21) lorsque la fourche de suivi (212) se trouve dans la seconde position.

11. L'organe de coupe (2) visé à une quelconque revendication parmi celles qui précèdent, dans lequel la roue de suivi (211) comprend un essieu (218) définissant l'axe de roue (ARo) et la fourche de suivi (212) comprend une paire de dents de fourche (212A, 212B) qui s'accouplent chacune à l'essieu (218), où l'une des dents de fourche (212B) vient de préférence buter contre le bras du pare-vent (23) lorsque la fourche de suivi (212) se trouve dans la seconde position afin d'empêcher la rotation de la roue de suivi (211).

12. L'organe de coupe (2) visé à la revendication 11, dans lequel la saillie (213) accouple les dents de la fourche (212A, 212B) entre elles.

13. L'organe de coupe (2) visé à une quelconque revendication parmi celles qui précèdent, dans lequel le bras du pare-vent (23) comprend une section de contact (24) avec laquelle la saillie (213) entre en contact lorsque la fourche de suivi (212) pivote vers la seconde position, la section de contact (24) comprenant une partie latérale du bras du pare-vent (23).

14. Un véhicule agricole (1), comprenant un châssis (12) et l'organe de coupe (2) d'une quelconque revendication parmi celles qui précèdent, supporté par le châssis (12), et comprenant en outre un collecteur (10) comprenant plusieurs dents rotatives (13).

15. Le véhicule agricole (1) visé à la revendication 14, où le véhicule agricole (1) est une récolteuse de fourrage.
